# EUROPÄISCHE PATENTSCHRIFT

(11) **EP 3 891 020 B1**
(45) Veröffentlichungstag und Bekanntmachung des Hinweises auf die Patenterteilung: **30.11.2022**
(21) Anmeldenummer: 19816587.0
(22) Anmeldetag: 02.12.2019
(51) Int. Cl.: B60R 13/00, B60Q 1/00

(54) **EMBLEMANORDNUNG FÜR EIN KRAFTFAHRZEUG**
EMBLEM ARRANGEMENT FOR A MOTOR VEHICLE
SYSTÈME D'EMBLÈME POUR VÉHICULE À MOTEUR

(30) Priorität: 05.12.2018 DE 102018220997
(43) Veröffentlichungstag der Anmeldung: 13.10.2021
(73) Patentinhaber: Volkswagen Aktiengesellschaft, 38440 Wolfsburg (DE)
(72) Erfinder: STUDENY, Christian, 38104 Braunschweig (DE); SEIFERT, Falko, 38106 Braunschweig (DE); ALMEIDA ESTEVAO, Miguel, 38448 Wolfsburg (DE); STURMAT, Sandra, 38102 Braunschweig (DE)
(86) Internationale Anmeldenummer: PCT/EP2019/083313
(87) Internationale Veröffentlichungsnummer: WO 2020/114969

(56) Entgegenhaltungen:
- DE-A1-102017 124 355
- JP-A- 2011 063 169
- US-A1- 2016 231 493

## Beschreibung

Die Erfindung betrifft eine Emblemanordnung für ein Kraftfahrzeug mit den Merkmalen vom Oberbegriff des Patentanspruchs 1.

Eine Emblemanordnung für ein Kraftfahrzeug ist aus der DE 10 2014 018 625 A1 bekannt geworden. Konkret umfasst die Emblemanordnung ein kreisrundes Emblem, ein kreisrundes Emblemträgerteil und einen ebenso kreisrunden, scheibenartigen Lichtleiter. Des Weiteren ist ein mit Leuchtmitteln besetztes Bauteil vorhanden, durch welches Licht in den Lichtleiter einkoppelbar ist. Die Emblemanordnung ist sandwichartig ausgebildet, wobei der Lichtleiter zwischen dem Emblem und dem Emblemträgerteil angeordnet ist. Das Emblem weist einen ringförmigen Abschnitt auf, der ein sternartiges Markenemblem (Symbol) umgibt. Der ringförmige Abschnitt ist aus einer Folie gebildet, welche auf dem Emblem aufgebacht ist und bei Tag eine Chromoptik aufweist. Die Folie ist lichtdurchlässig und daher bei Dunkelheit durchleuchtbar.

In der DE 10 2016 007 119 A1 ist ein Radardom (Radom) beschrieben, welches beleuchtbar ist und ebenfalls ein sternförmiges Symbol als Markenemblem aufweist. Das Radom weist einen scheibenartigen Lichtleiter auf, in den von radial seitlich angeordneten Lichtquellen Licht eingekoppelt wird. Das eingekoppelte Licht gelangt über einen Lichtaustrittsbereich radial auf eine Umlenkstruktur, anhand welcher das austretende Licht nach vorne in Richtung eines gewölbten, transparenten Abdeckteils gerichtet wird. In dem Abdeckteil ist eine Anzahl von Heizelementen in Form von Heizdrähten angeordnet, welche im Betrieb eine Vereisung einer Außenfläche des Radoms verhindern. Das Radom ist zum Schutz einer dahinter angeordneten Radareinheit vorgesehen.

In der DE 10 2013 007 378 A1 wird ein Verfahren zum Herstellen eines Emblems für einen Kraftwagen beschrieben. Dabei wird zunächst eine Schutzschicht auf eine Folie aufgebracht, welche danach zu einem Halbzeug geformt wird. Das Halbzeug wird anschließend in ein Spritzgießwerkzeug eingelegt und nach Ausstanzen vorgegebener Bereiche des Halbzeugs mit einem lichtdurchlässigen Kunststoff hinterspritzt.

Der DE 20 2005 007 720 U1 kann ein Markenemblem entnommen werden, welches aus einem Emblemträger und einer auf dem Emblemträger befestigten Elektrolumineszensfolie besteht.

Die DE 20 2016 106 857 U1 offenbart eine als Scheinwerfer ausgebildete, phosphoreszierende Beleuchtungsbaugruppe. Konkret ist auf einer Lichtscheibe des Scheinwerfers eine phosphoreszierende Struktur in Form eines Markenemblems aufgebracht.

In der CN 201 484 317 U ist ein beleuchtbares Markenemblem beschrieben, bei dem das Licht von Leuchtdioden rückseitig abgestrahlt und in einem Lichtleiter, welcher die Form des Markenemblems aufweist, verteilt wird. Eine Verteilung des Lichts wird über konische Einbuchtungen des Lichtleiters bewerkstelligt, die den Leuchtdioden abgewandt sind.

Aus der DE 20 2016 000 238 U1 ist ein beleuchtetes Markenemblem bekannt geworden, welches vollflächig oder in seiner Kontur beleuchtet werden kann. Das Markenemblem weist eine transparente Linse auf, welche vorderseitig gegen Umwelteinflüsse mit einer Beschichtung versehen sein kann. Rückseitig weist die Linse eine Vertiefung auf, die der Form des eigentlichen Markenemblems entspricht. In die Vertiefung wird ein Dekorelement in Form einer chromoptischen Beschichtung eingebracht. Das Dekorelement kann durchleuchtbar ausgebildet sein. Außerhalb der Vertiefung wird die Rückseite der Linse mit einer opaken Folie versehen. Zur Realisierung einer Konturbeleuchtung hingegen ist das Dekorelement opak ausgebildet. Außerhalb der Vertiefung wird die Linse mit einer Folie versehen, die derart bedruckt ist, dass deckende (opake) Bereiche und transluzente, die Kontur des Markenemblems abbildende Bereiche entstehen. Es wird auch vorgeschlagen, das Dekorelement zusammen mit der Folie als Folieninsert auszubilden, indem die Folie mit einer chromoptischen Beschichtung versehen, anschließend gemäß der rückseitigen Geometrie und Vertiefung der Linse verformt und mit der Linse verbunden wird.

Die DE 10 2017 124 355 A1 offenbart eine Emblemanordnung gemäß dem Oberbegriff des Anspruchs 1 und beschreibt eine beleuchtete, chromatische Emblemanordnung mit Mikro-LEDs. Unter anderem wird eine Emblemanordnung beschrieben, welche ein Stützelement mit einer darauf befindlichen, lichterzeugenden Anordnung umfasst. Die lichterzeugende Anordnung kann beispielsweise eine Elektrolumineszenz-Lichtquellenanordnung oder diskrete Lichtquellen enthalten. Über der lichterzeugenden Anordnung ist ein lichtdurchlässiger Basisbereich angeordnet, der als Hohlraum oder auch als lichtdurchlässiges, polymeres Material ausgebildet sein kann. Der Basisbereich ist von einer chromatischen Schicht überdeckt, welche der Emblemanordnung einen chrom- oder spiegelartigen Anschein verleiht. Über dem Basisbereich ist wiederum eine Kapselungsstruktur angeordnet, welche auf dem Stützelement aufliegt und die lichterzeugende Anordnung, den Basisbereich sowie die chromatische Schicht einkapselt. In die Kapselungsstruktur können lichtundurchlässige Designmerkmale eingebettet sein. Die Kapselungsstruktur kann wiederum mit einer lichtdurchlässigen Schicht beschichtet sein.

Aus der JP 2011 063169 A, die eine Emblemanordnung gemäß dem Oberbegriff des Anspruchs 2 offenbart, ist eine beleuchtbare Emblemanordnung bekannt, welche ein Emblem ausbildet. Das Emblem ist über einem lichtleitenden Körper angeordnet. Der lichtleitende Körper ist auf einer reflektierenden Grundplatte angeordnet, auf der ebenfalls eine Platine mit einer Lichtquelle angeordnet ist und von dem lichtleitenden Körper überdeckt wird. Zwischen dem Emblem und dem lichtleitenden Körper sind eine reflektierende Schicht und eine lichtundurchlässige Schicht übereinander angeordnet. Die Schichten sind lediglich in Bereichen, die das Emblem konturartig umgeben, durch Vorsprünge des lichtleitenden Körpers durchbrochen. Auf der dem Emblem abgewandten Seite des lichtleitenden Körpers sind nutenartige Vertiefungen vorhanden, die sich in Lichtabstrahlrichtung mit den Vorsprüngen decken.

Schließlich ist der US 2016/231493 A1 eine Emblemanordnung zu entnehmen, welche aus einem Emblem, einem Flächenlichtleiter und einem Gehäuse besteht. Der Flächenlichtleiter weist den Umriss des Emblems auf und wird zusammen mit dem Emblem in einer plattenartigen Ausnehmung des Gehäuses aufgenommen. In einer umlaufenden Seitenwandung des Gehäuses sind gegenüberliegend zwei Lichtquellen vorhanden, welche gegenüber radialen Ausnehmungen des Flächenlichtleiters angeordnet sind.

Der vorliegenden Erfindung liegt die Aufgabe zu Grunde, eine beleuchtbare Emblemanordnung für ein Kraftfahrzeug bereitzustellen, mit welcher sowohl bei Tag als auch bei Nacht ein ansprechendes Erscheinungsbild erzeugt werden kann.

Vorstehend genannte Aufgabe wird mit einer Emblemanordnung mit den Merkmalen von Patentanspruch 1 sowie Patentanspruch 2 gelöst. Vorteilhafte Ausbildungen beziehungsweise Weiterbildungen der Erfindung sind den abhängigen Ansprüchen zu entnehmen.

Die Erfindung geht zunächst von einer Emblemanordnung für ein Kraftfahrzeug aus, welche ein Emblemträgerteil und ein ein Markenemblem ausbildendes Element aufweist. Ferner ist wenigstens ein Leuchtmittel zur Beleuchtung der Emblemanordnung vorhanden. Das das Markenemblem ausbildende Element ist ein wenigstens zwei Schichten aufweisender Schichtaufbau. Der Schichtaufbau weist in einer Draufsicht auf die Emblemanordnung, also in einer Draufsicht auf den Umriss der Emblemanordnung, lichtdurchlässige und lichtundurchlässige Bereiche auf. Durch die lichtdurchlässigen Bereiche kann die Form des Markenemblems vollflächig abgebildet werden bzw. wird so abgebildet oder das Markenemblem kann durch die lichtdurchlässigen Bereiche lediglich in seiner Kontur abgebildet werden bzw. wird so abgebildet.

Wird rein beispielhaft angenommen, dass ein den Verkehrsteilnehmern bekanntes Markenemblem allein den Umriss und den Flächeninhalt eines Kreises aufweist, so entspricht es einer vollflächigen Abbildung des Markenemblems, wenn dazu in der Emblemanordnung ebenfalls ein lichtdurchlässiger Bereich vorhanden ist, mit dem Umriss eines Kreises und zusätzlich mit der durch den Kreis umgebenen Fläche.

Eine Abbildung des Markenemblems lediglich in seiner Kontur setzt dann einen lichtdurchlässigen Bereich in der Emblemanordnung voraus, der nur als linienartiger Kreis ausgebildet ist, also ohne die vom Kreis umgebene Fläche.

Analog kann vorgegangen werden, wenn ein Markenemblem andere Symbole, Formen, Zeichen, Zahlen oder Buchstaben aufweist Durch die genannten Merkmale werden die Voraussetzungen dafür gegeben, dass die Emblemanordnung in einem äußerst speziellen Nachtdesign erleuchten kann. Es ist dabei möglich, dass andere Verkehrsteilnehmer bei Dunkelheit das Markenemblem als solches selbst erleuchtet wahrnehmen können.

Es wird in einer ersten, erfindungsgemäßen Lösungsalternative nun vorgeschlagen, dass der Schichtaufbau eine erste, als transparente Trägerfolie ausgebildete Schicht aufweist und eine zweite Schicht, durch welche die lichtdurchlässigen und die lichtundurchlässigen Bereiche ausgebildet werden, wobei die zweite Schicht aus wenigstens zwei aufeinanderliegenden Teilschichten besteht, von denen eine erste Teilschicht die lichtdurchlässigen und die lichtundurchlässigen Bereiche ausbildet und die wenigstens eine zweite Teilschicht lichtdurchlässig ausgebildet ist und die gleiche Farbe aufweist, wie die lichtdurchlässigen Bereiche der ersten Teilschicht.

Durch diese Merkmale wird die Voraussetzung dafür geschaffen, dass mit der Emblemanordnung sowohl bei Tag als auch bei Nacht ein ansprechendes Erscheinungsbild erzeugt werden kann. Insbesondere wird es durch den speziellen Schichtaufbau ermöglicht, dass das Markenemblem zum einen bei Dunkelheit gut durchleuchtbar ist und zum anderen auch bei Helligkeit eine optische Anmutung besonders hoher Güte aufweist.

Gemäß einer ersten Weiterbildung der Erfindung wird vorgeschlagen, dass die zweite Schicht aus wenigstens drei aufeinanderliegenden Teilschichten besteht, von denen eine erste Teilschicht die lichtdurchlässigen und die lichtundurchlässigen Bereiche ausbildet und die wenigstens eine zweite und dritte Teilschicht lichtdurchlässig ausgebildet sind und die gleiche Farbe aufweisen, wie die lichtdurchlässigen Bereiche der ersten Teilschicht.

Es hat sich gezeigt, dass durch eine derartige Weiterbildung die Anmutung des Markenemblems bei Tag bzw. bei Helligkeit optimiert werden kann.

Gemäß der ersten Lösungsalternative liegt der Schichtaufbau an einer Lichtscheibe an. Dabei weist die Lichtscheibe eine randseitige, umlaufende Wandung auf, an der ein sich vom übrigen Schichtaufbau unterscheidender, randseitiger Schichtaufbau vorliegt. Der randseitige Schichtaufbau weist wenigstens drei aufeinanderliegende Teilschichten auf, von denen die Farbe der zur randseitigen Wandung am nächsten liegenden Teilschicht die größte Helligkeit und die Farbe der von der randseitigen Wandung am weitesten beabstandeten Teilschicht die geringste Helligkeit aufweist.

Hierdurch kann es ermöglicht werden, dass die Emblemanordnung im Randbereich, also radial außen um das eigentliche Markenemblem herum, bei Dunkelheit nicht beleuchtet wird, bei Tag jedoch die gleiche optische Anmutung aufweist, wie das Markenemblem. Dies trägt also zur Optimierung eines Erscheinungsbildes in hoher Qualität bei.

In diesem Zusammenhang hat es sich gezeigt, dass es zur Bereitstellung eines aus hellen Buchstaben und dunklem Hintergrund bestehenden Markenemblems besonders zweckmäßig ist, wenn die Farbe der von der randseitigen Wandung am weitesten beabstandeten Teilschicht schwarz ist. Die Farbe der zur randseitigen Wandung am nächsten liegenden Teilschicht weist dann zweckmäßigerweise die gleiche Farbe auf, wie die lichtdurchlässigen Bereiche der die lichtdurchlässigen und lichtundurchlässigen Bereiche ausbildenden Teilschicht.

Eine andere Weiterbildung schlägt vor, dass die Farbe der zur randseitigen Wandung am nächsten liegenden Teilschicht weiß ist. Diese Ausgestaltung ist besonders dann vorteilhaft, wenn das Markenemblem aus weißem Buchstaben/Symbolen auf schwarzem Hintergrund bestehen soll.

Es wird als zweite, erfindungsgemäße Lösungsalternative für die eingangs erwähnte Aufgabe auch noch vorgeschlagen, dass der Schichtaufbau eine erste, lichtundurchlässige Schicht und wenigstens eine zweite, lichtundurchlässige Schicht aufweist. Durch die wenigstens zwei lichtundurchlässigen Schichten wird das eigentliche Markenemblem bei Tag vollflächig sichtbar. Die lichtundurchlässigen Schichten können ebenfalls beliebige Farben bzw. Farbkombinationen aufweisen und beispielsweise aus unbunten oder bunten Farben bestehen. Ferner weist die Emblemanordnung in ihrem Randbereich wenigstens eine Platine auf, auf der mehrere Leuchtmittel angeordnet sind, deren Licht im Randbereich der Emblemanordnung in einen Flächenlichtleiter eingekoppelt wird. Der Flächenlichtleiter weist auf seiner dem Schichtaufbau abgewandten Seite eine Lichtauskoppelstruktur auf, die in einer Draufsicht auf den Umriss der Emblemanordnung mit Bereichen zur Deckung kommt oder in etwa zur Deckung kommt, in denen der besagte Schichtaufbau vollständig entfernt ist. Diese Bereiche bilden dann wiederum die lichtdurchlässigen Bereiche aus.

Auch diese Lösung bildet die Voraussetzung dafür, dass mit der Emblemanordnung sowohl bei Tag als auch bei Nacht ein sehr ansprechendes Erscheinungsbild erzeugt werden kann.

Um die Herstellbarkeit der Emblemanordnung zu erleichtern und damit die Herstellkosten zu senken, wird gemäß der zweiten Lösungsalternative vorgeschlagen, dass die Lichtauskoppelstruktur des Lichtleiters eine Bedruckung ist.

Gemäß der zweiten Lösungsalternative weist die Lichtauskoppelstruktur streifenartige Abschnitte auf. Die genannten Bereiche, in denen der Schichtaufbau vollständig entfernt ist, sind ebenfalls linien- oder streifenartig ausgebildet, wobei eine Breite der streifenartigen Abschnitte der Lichtauskoppelstruktur größer ist als eine Breite der linien- oder streifenartig ausgebildeten Bereiche, in denen der Schichtaufbau vollständig entfernt ist.

Auf diese Weise wird die Voraussetzung dafür geschaffen, dass das Markenemblem bei Dunkelheit konturartig erleuchten kann, wobei bei Helligkeit nicht in das Innere der Emblemanordnung geschaut und dadurch die hohe Qualitätsanmutung der Emblemanordnung nicht getrübt werden kann.

Es ist in einer weiteren Ausgestaltung des Erfindungsgedankens möglich, dass die anfangs für die erste Lösungsalternative genannte, transparente Trägerfolie eine profilierte Folie ist. Die profilierte Folie kann beispielsweise tiefgezogen sein. Hierdurch werden spezielle 3D-Effekte ermöglicht, so dass das Markenemblem eine 3D-Anmutung aufweisen kann.

Es hat sich gezeigt, dass die Bereiche hinsichtlich ihrer Lichtdurchlässigkeit sehr genau dosiert werden können, wenn in einer anderen Weiterbildung die anfangs für die erste Lösungsalternative genannte, zweite Schicht eine Siebdruckschicht ist, diese Schicht also im Siebdruckverfahren aufgebracht wurde. Dabei ist auch denkbar, dass die lichtundurchlässigen Bereiche in einer ersten Farbe (beispielsweise Schwarz) und die lichtdurchlässigen Bereiche in einer zweiten Farbe (beispielsweise Weiß) bedruckt werden. Es sind jedoch neben den genannten, unbunten Farben, je nach Anwendungsfall auch andere, bunte Farbkombinationen denkbar. Auch eine Kombination von bunten und unbunten Farben ist vorstellbar.

Um eine gute Lichteinkopplung in den Lichtleiter zu ermöglichen und dabei Hotspots vermeiden zu können, wird vorgeschlagen, dass der Lichtleiter an seiner dem Emblemträgerteil zugewandte Seite mehrere Vertiefungen aufweist. In die Vertiefungen ragt jeweils ein Leuchtmittel hinein, wobei die Vertiefungen mit den Leuchtmitteln nach außen (also zu einer Sichtseite der Emblemanordnung) von den lichtundurchlässigen Bereichen verdeckt sind.

Zur Vermeidung einer Überhitzung der Leuchtmittel und damit zur Gewährleistung einer einwandfreien Funktion schlägt die Erfindung in einer anderen Ausbildung vor, das Emblemträgerteil mit wenigstens einem Kühlkörper zu verbinden.

Gemäß einer anderen Ausbildung der Erfindung ist die Farbe der ersten, lichtundurchlässigen Schicht Schwarz, und die Farbe der zweiten, lichtundurchlässigen Schicht weist eine chromähnliche Anmutung auf. Dabei weist die erste Schicht in einer Draufsicht auf den Umriss der Emblemanordnung von der Sichtseite her gesehen Materialausnehmungen auf. Aufgrund der Materialausnehmungen ist die zweite Schicht im Bereich der Materialausnehmungen sichtbar, wobei die Materialausnehmungen die Form des Markenemblems ausbilden.

Durch eine derartige Weiterbildung kann ein Tagdesign des Markenemblems mit einer Chromanmutung realisiert werden.

Es kann der Bedarf bestehen, dass die Emblemanordnung vor einem Radarsensor verbaut werden soll. Um hier eine einwandfreie Funktion des Radarsensors durch die Emblemanordnung trotz des Schichtaufbaus mit Chromanmutung nicht zu beeinträchtigen, wird vorgeschlagen, dass der gesamte Schichtaufbau, insbesondere auch die zweite Schicht mit der chromähnlichen Anmutung für Radarstrahlen durchlässig ausgebildet ist. Hierzu ist es zweckmäßig, wenn die zweite, lichtundurchlässige Schicht aus einem Halbleiter wie Germanium oder Indium besteht.

Ein guter Schutz des das Markenemblem ausbildenden Elementes gegen Verschmutzung oder dergleichen kann dadurch gewährleistet sein, dass das das Markenemblem ausbildende Element nach außen von einer Lichtscheibe abgedeckt ist. Die Lichtscheibe kann vorzugsweise aus Kunststoff, bspw. aus Polycarbonat (PC) gefertigt sein. Ein solches Material ist kostengünstig und stabil.

Zur Optimierung eines Schutzes der Emblemanordnung wird schließlich vorgeschlagen, dass die Lichtscheibe von einer UV-Schutzschicht überzogen ist.

Bei Einsatz einer Lichtscheibe ist es zudem zweckmäßig, wenn die Lichtscheibe an den das Markenemblem ausbildenden Schichtaufbau angespritzt ist. Mit anderen Worten fungiert die Lichtscheibe dadurch als Träger für den das Markenemblem ausbildenden Schichtaufbau. Dies begünstigt eine einfache und prozesssichere Herstellbarkeit der Emblemanordnung, wobei Luftspalte vermieden werden können.

Beispielsweise ist denkbar, dass der das Markenemblem ausbildende Schichtaufbau im Spritzgussverfahren von der Lichtscheibe überspritzt ist. Alternativ ist denkbar, mit einem solchen Verfahren den Schichtaufbau durch die Lichtscheibe zu hinterspritzen.

Um auf einfache Weise eine Lichteinkopplung im Randbereich der Emblemanordnung sicherstellen zu können und auch eine Radartauglichkeit der Emblemanordnung nicht zu beeinträchtigen, wird vorgeschlagen, die anfangs für die zweite Lösungsalternative erwähnte Platine ringartig auszubilden. Es ist prozesstechnisch ab auch vorteilhaft, wenn zwei halbkreisförmige Platinen vorhanden sind, die sich zu einem Ring ergänzen.

Zur Realisierung definierter Abstände zwischen Bauteilen der Emblemanordnung, welche für eine Radartauglichkeit von Wichtigkeit sein können, sind zweckmäßigerweise Abstandshalter vorhanden. Derartige Abstandshalter, welche auch einstückig mit den Bauteilen verbunden sein können, können beispielsweise zur Erzeugung definierter Luftspalte zwischen dem Emblemträgerteil und dem Lichtleiter, zwischen dem Lichtleiter und dem das Markenemblem ausbildenden Element und/oder zwischen dem das Markenemblem ausbildenden Element und der Lichtscheibe dienen.

Nach einer höchst vorteilhaften Ausbildung der Erfindung ist es auch denkbar, zwischen dem in der zweiten Lösungsalternative erwähnten Lichtleiter und der Lichtscheibe ein ringförmiges Lichtdämpfungselement anzuordnen. Dadurch kann das Lichtdämpfungselement im Randbereich der Lichtscheibe die Intensität der aus dem Lichtleiter austretenden Lichtstrahlen abmildern und somit selbst bei einer gewünschten Radartauglichkeit eine vollflächige Beleuchtung des Markenemblems mit einer hohen Homogenität im Erscheinungsbild ermöglichen.

Mit der vorliegenden Erfindung soll auch ein Kraftfahrzeug unter Schutz gestellt werden, welches wenigstens eine erfindungsgemäße Emblemanordnung aufweist.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: ein Kraftfahrzeug mit einer erfindungsgemäßen Emblemanordnung, in einer Frontansicht,
- Fig. 2: die Darstellung einer Emblemanordnung in Alleinstellung, und zwar in einer Draufsicht von der Sichtseite auf den Umriss der Emblemanordnung,
- Fig. 3: eine Schnittdarstellung gemäß Schnittverlauf III aus Fig. 2,
- Fig. 4: eine perspektivische Explosionsdarstellung der Emblemanordnung,
- Fig. 5a: eine äußerst schematische Darstellung eines möglichen Schichtaufbaus bei einer ersten Ausführungsform der Emblemanordnung,
- Fig. 5b: eine äußerst schematische Darstellung eines möglichen Schichtaufbaus in einer zweiten Ausführungsform der Emblemanordnung,
- Fig. 5c: eine detaillierte Darstellung des Schichtaufbaus sowohl im Front- als auch im Randbereich der Emblemanordnung,
- Fig. 5d: eine äußerst schematische Darstellung einer weiteren Ausführungsform der Emblemanordnung unter Verzicht auf einen Lichtleiter,
- Fig. 5e: eine äußerst schematische Darstellung einer noch weiteren Ausführungsform der Emblemanordnung unter Verwendung eines Lichtdämpfungselementes,
- Fig. 6: die Draufsicht auf eine Emblemanordnung in Alleinstellung, in einer weiteren Ausführungsform,
- Fig. 6a: eine perspektivische Explosionsdarstellung der Emblemanordnung nach Fig. 6,
- Figuren 7: eine äußerst schematische Darstellung möglicher Schichtaufbauten in drei Varianten und
- Fig. 8: eine Detaildarstellung gemäß Detail VIII aus Fig. 7c.

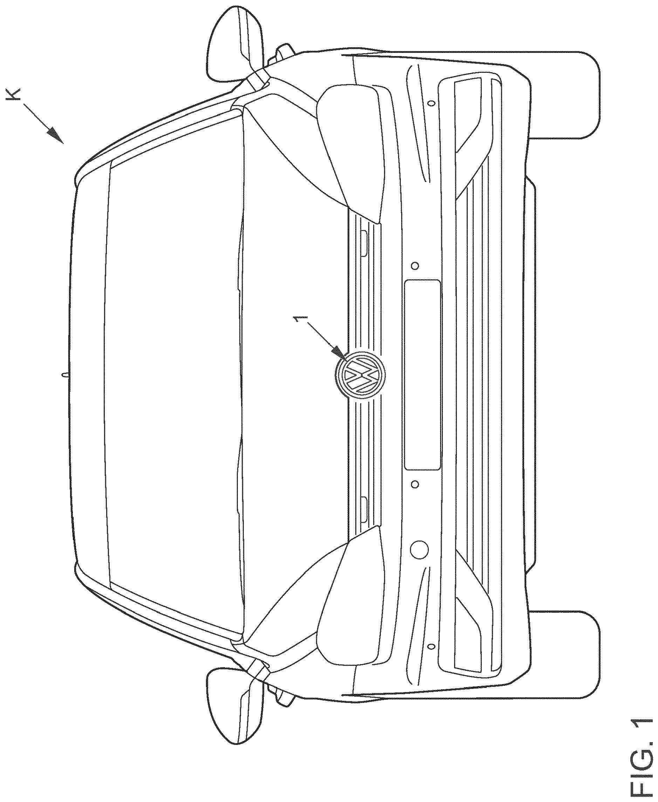

Zunächst wird auf Fig. 1 Bezug genommen. In dieser Figur ist ein Kraftfahrzeug K ersichtlich. Bei dem Kraftfahrzeug K kann es sich um ein Kraftfahrzeug mit Verbrennungsmotor, ein Hybridfahrzeug oder auch um ein elektrisch angetriebenes Kraftfahrzeug handeln. Das Kraftfahrzeug K weist an seiner Front eine Emblemanordnung 1 auf. Die Emblemanordnung 1 ist derart ausgebildet, dass mit ihr ein bestimmtes Tagdesign und auch ein bestimmtes Nachtdesign realisierbar ist. Das Kraftfahrzeug K weist eine Emblemanordnung 1 auch an seinem Fahrzeugheck auf (in dieser Figur nicht sichtbar).

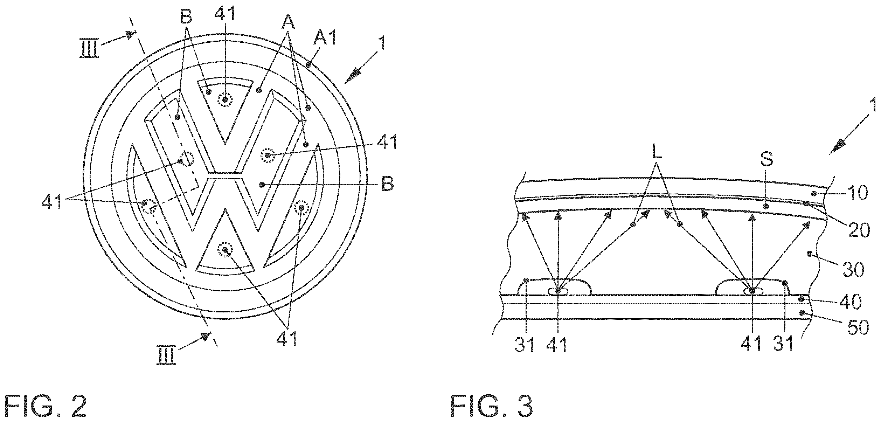

In der Fig. 2 ist die Emblemanordnung 1 in Alleinstellung und in einer Draufsicht von ihrer Sichtseite her dargestellt. Die Emblemanordnung 1 weist einen kreisförmigen Umriss auf. Des Weiteren ist die Emblemanordnung 1 in lichtdurchlässige Bereiche A und lichtundurchlässige Bereich B unterteilt. Durch die lichtdurchlässigen Bereiche A wird die Form eines Markenemblems nachgebildet. Unter den lichtundurchlässigen Bereichen B ist jeweils ein Leuchtmittel 41 angeordnet (gestrichelt angedeutet). Bei den Leuchtmitteln 41 handelt es sich vorzugsweise um Leuchtdioden. Die Leuchtdioden 41 können auch als RGB-LEDs ausgebildet sein, welche Licht in beliebigen Farben aussenden können.

In Fig. 2 ist noch ein kreisförmiger, ebenfalls lichtundurchlässiger Bereich A1 in der Emblemanordnung 1 erkennbar, welcher das durch die lichtdurchlässigen Bereiche A gebildete Markenemblem umrahmt.

Anhand von Fig. 3 ist ersichtlich, dass die Emblemanordnung 1 ein Emblemträgerteil 50 aufweist, auf dem eine Platine 40 angeordnet ist. Die Platine 40 trägt die besagten Leuchtmittel 41. Die Platine 40 wird ihrerseits von einem Lichtleiter 30 überdeckt, der insbesondere als Flächenlichtleiter mit Auskoppelstrukturen ausgebildet sein kann.

Lichtstahlen L der Leuchtmittel 41 gelangen in den Lichtleiter 30 und werden nach außen in Richtung einer den Lichtleiter 30 überdeckenden Lichtscheibe 10 geleitet. Die Lichtscheibe 10 ist vorzugsweise aus Kunststoff, bevorzugt Polycarbonat.

An der dem Lichtleiter 30 zugewandten Innenseite der Lichtscheibe 10 ist ein Schichtaufbau 20 angeordnet. Durch den Schichtaufbau 20 werden die in der Fig. 2 ersichtlichen lichtdurchlässigen und lichtundurchlässigen Bereiche A und B realisiert. Die lichtdurchlässigen Bereiche A bilden das eigentliche Markenemblem ab. Der Schichtaufbau 20 wird später noch näher erläutert.

Zwischen der Lichtscheibe 10 und dem Lichtleiter 30 befindet sich ein Luftspalt S.

Des Weiteren ist erkennbar, dass der Lichtleiter 30 an seiner der Lichtscheibe 10 abgewandten beziehungsweise der Platine 40 zugewandten Seite Vertiefungen 31 aufweist. In die Vertiefungen 31 ragt jeweils ein Leuchtmittel 41 hinein. Die Vertiefungen 41 bilden so jeweils eine geeignete Lichteinkoppelstelle für die Lichtstrahlen L eines Leuchtmittels 41.

Unter Umständen ist es auch denkbar, auf den Einsatz des Lichtleiters 30 zu verzichten. In diesem Fall müssen die begrenzenden Wände des dann freiwerdenden Raumes zwischen der Platine 40 und dem Schichtaufbau 20 jedoch hochreflektierend (vorzugsweise weiß) ausgebildet sein, um überhaupt die notwendige Homogenität in der Lichtverteilung erzielen zu können.

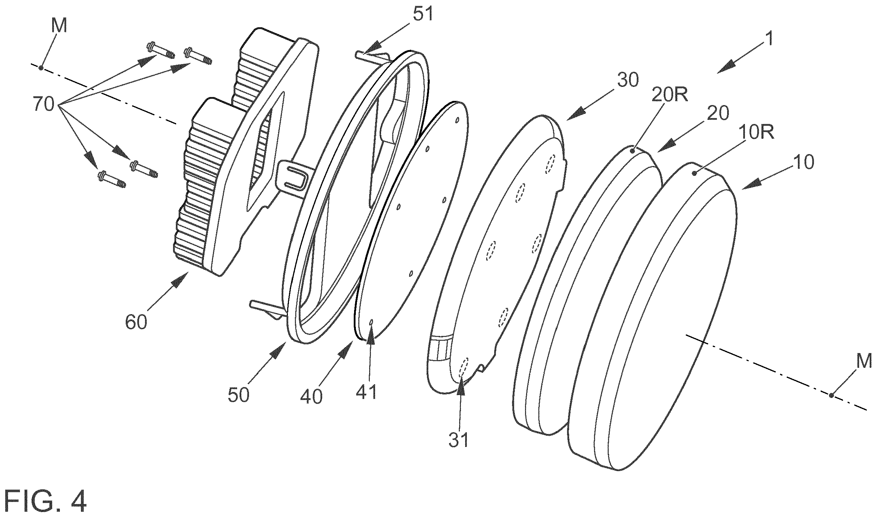

Anhand der Fig. 4 ist nun ein perspektivischer Aufbau der Emblemanordnung 1 in Explosionsdarstellung ersichtlich. Aus dieser Darstellung wird besonders gut der sandwichartige Aufbau der Emblemanordnung 1 ersichtlich. So dient das Emblemträgerteil 50 auf der einen Seite zur Befestigung eines Kühlkörpers 60 mittels Befestigungsmitteln 70 und auf der anderen Seite zur Befestigung der Lichtscheibe 10.

Zwischen dem Emblemträgerteil 50 und der Lichtscheibe 10, welchen eine randseitige, umlaufende Wandung 10R aufweist, sind die Platine 40 mit den Leuchtmitteln 41, der Lichtleiter 30 und der besagte Schichtaufbau 20 sandwichartig aufgenommen. Der Schichtaufbau 20 weist ebenfalls einen randseitigen, umlaufenden Schichtaufbau 20R auf, vergleichbar einer umlaufenden Wandung. Die Platine 40 und der Lichtleiter 30 sind scheibenartig ausgebildet.

Die montierte Emblemanordnung 1 kann mittels Rastmitteln 51 in nicht näher dargestellten Rastöffnungen des Kraftfahrzeugs K rastend montiert werden.

Die meisten Bauteile der Emblemanordnung 1 sind kreisrund ausgebildet, mit einer Mittelachse M.

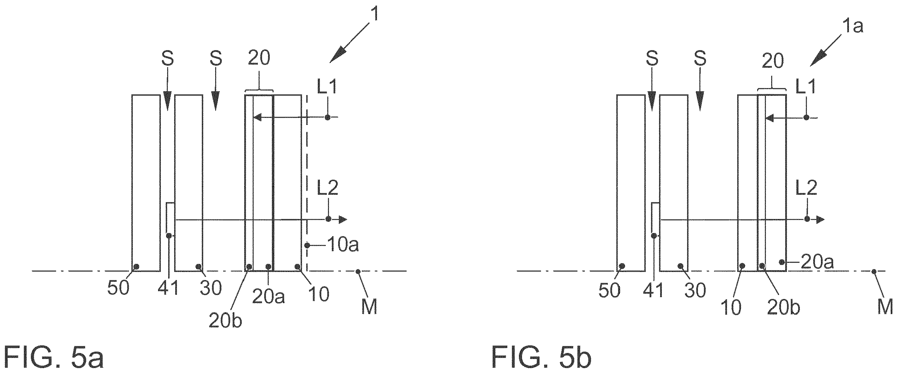

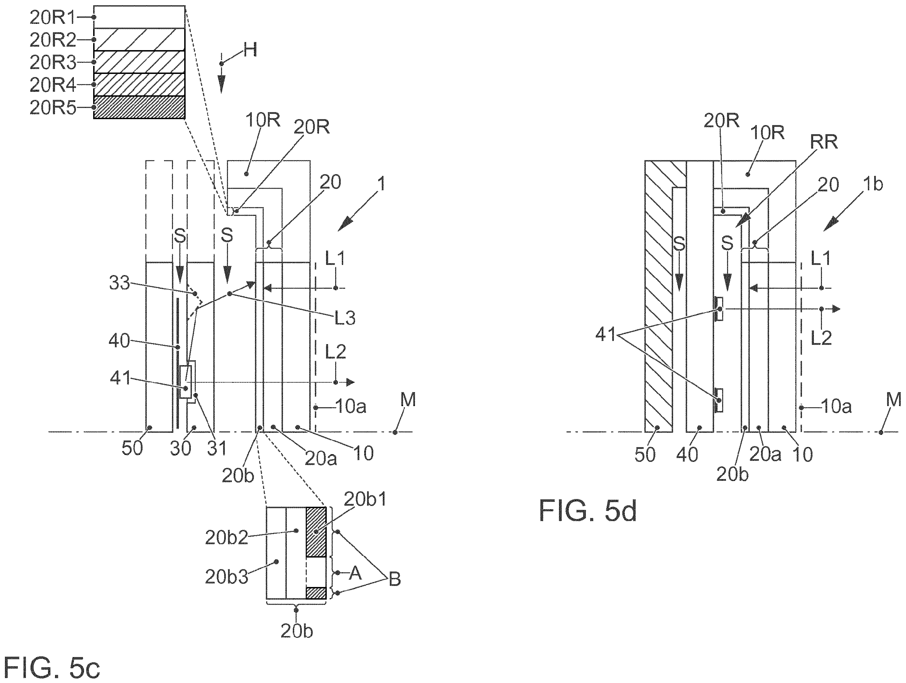

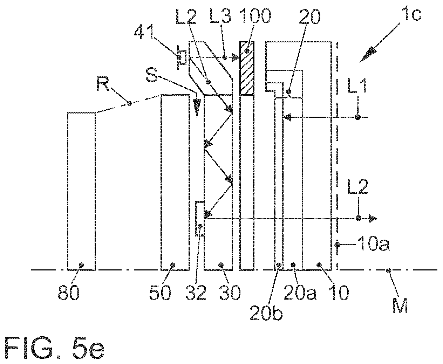

Anhand der Figuren 5 wird ein möglicher Schichtaufbau beziehungsweise eine mögliche Anordnung der Schichten näher erläutert. So ist denkbar, dass der besagte Schichtaufbau 20 von der Lichtscheibe 10 überspritzt ist (vgl. Fig. 5a). Die Lichtscheibe 10 und der Schichtaufbau 20 sind somit stoffschlüssig im Spritzgussverfahren miteinander verbunden.

Der Schichtaufbau 20 weist eine transparente Trägerfolie 20a auf. Die Trägerfolie 20a ist vorzugsweise tiefgezogen und weist dadurch eine dreidimensionale Struktur auf. Auf ihrer der Lichtscheibe 10 abgewandten Seite ist die Trägerfolie 20a mit einer Siebdruckschicht 20b bedruckt, welche also im Siebdruckverfahren auf die Trägerfolie 20a aufgebracht wurde. Je nachdem, ob lichtdurchlässige Bereiche A oder lichtundurchlässige Bereiche B realisiert werden sollen, ist der Siebdruck ausgestaltet.

So bildet der Siebdruck an den lichtdurchlässigen Bereichen A (vergleiche Fig. 2) eine weiße, lichtdurchlässige und damit durchleuchtbare Beschichtung aus. An den lichtundurchlässigen Bereichen B ist der Siebdruck lichtundurchlässig, beispielsweise in einer schwarzen Farbe ausgestaltet.

Dies führt dazu, dass die Emblemanordnung 1 am Tag eine Taganmutung aufweist, bei der die Bereiche A weiß und die Bereiche B schwarz erscheinen. Das eigentliche Markenemblem wird durch die Bereiche A abgebildet und hebt sich optisch gut sichtbar von den Bereichen B ab.

Fallen bei Tag Lichtstrahlen L1 von außen auf die Emblemanordnung 1, so gelangen sie durch die transparente Lichtscheibe 10 und durch die transparente Trägerfolie 20a bis hin zur Siebdruckschicht 20b. Von der Siebdruckschicht 20b werden die Lichtstrahlen L1 wieder derart zurück reflektiert, dass sich für einen Betrachter das in Fig. 2 ersichtliche, durch die Bereiche A gebildete Markenemblem ergibt.

Bei Dunkelheit hingegen und bei Aktivierung der Leuchtmittel 41 werden von den Leuchtmitteln 41 ausgesendete Lichtstrahlen L2 durch den Lichtleiter 30 homogenisiert und gelangen lediglich durch die lichtdurchlässigen Bereiche A der Siebdruckschicht 20b nach außen. An den lichtundurchlässigen Bereichen B werden die Lichtstrahlen L2 der Leuchtmittel 41 gestoppt.

Auf diese Weise können im Ausführungsbeispiel die lichtdurchlässigen Bereiche A der Siebdruckschicht 20b hinterleuchtet werden, so dass ein mit den Bereichen A vollflächig leuchtendes Markenemblem erscheint (vgl. Fig. 2).

Im Ausführungsbeispiel ist noch dargestellt, dass die Lichtscheibe 10 außen mit einer UV-Schutzschicht 10a überdeckt sein kann. Ferner sind denkbare Luftspalte in der Emblemanordnung 1 mit S beziffert.

Die Fig. 5b zeigt eine Variante der Emblemanordnung 1a, bei der im Gegensatz zur Fig. 5a die Schichtanordnung 20 mit der Lichtscheibe 10 hinterspritzt ist. In diesem Fall werden der Lichtleiter 30 und das Emblemträgerteil 50 zwar auch durch die Lichtscheibe 10 geschützt, jedoch ist der Schichtaufbau 20 nicht geschützt, so dass das Ausführungsbeispiel gemäß Fig. 5a vorgezogen wird.

Anhand der Fig. 5c soll der Schichtaufbau der Emblemanordnung 1 detailliert beschrieben werden. So ist zunächst erkennbar, dass die Emblemanordnung 1 im Frontbereich den Schichtaufbau 20 und im Randbereich, also im Bereich der randseitigen, umlaufenden Wandung 10R der Lichtscheibe 10 einen davon abweichenden Schichtaufbau 20R aufweist.

Konkret wird der Schichtaufbau 20 zunächst durch die transparente Trägerfolie 20a gebildet, auf der die Schicht 20b aufgebracht ist, insbesondere als Siebdruckschicht. Die Schicht 20b wiederum besteht aus wenigstens zwei aufeinanderliegenden, im Ausführungsbeispiel aus drei aufeinanderliegenden Teilschichten 20b1, 20b2 und 20b3.

Durch die Teilschicht 20b1 werden die lichtdurchlässigen Bereiche A und die lichtundurchlässigen Bereiche B ausgebildet. Zweckmäßigerweise erfolgt zunächst eine Bedruckung der transparenten Trägerfolie 20a durch eine lichtundurchlässige Schicht unter Maskierung der Bereiche A. Die lichtundurchlässige Schicht 20b1 kann beispielsweise die Farbe Schwarz aufweisen. Im zweiten Schritt, nach Trocknung der ersten Teilschicht 20b1 und Entfernung der Maskierung kann dann eine vollflächige Aufbringung der zweiten Teilschicht 20b2 durch Bedruckung der ersten Teilschicht 20b1 mit einer weiteren Farbe erfolgen. Dadurch werden auch die vorher maskierten Bereiche A innerhalb der ersten Teilschicht 20b1 von der Farbe der zweiten Teilschicht 20b2 durchsetzt, weisen also die gleiche Farbe auf. Die zweite Teilschicht 20b2 (und damit auch jeder Bereich A) ist lichtdurchlässig ausgebildet. Wiederum nach Trocknung der zweiten Teilschicht 20b2 erfolgt der Auftrag der dritten Teilschicht 20b3 durch vollflächige Bedruckung der zweiten Teilschicht 20b2 mit der gleichen Farbe, wie die der Teilschicht 20b2. Auch die Teilschicht 20b3 ist lichtdurchlässig ausgebildet. Im vorliegenden Ausführungsbeispiel sind die Teilschichten 20b2 und 20b3 durch Bedruckung mit einer weißen Farbe erzeugt.

Durch eine derartige Ausgestaltung des Schichtaufbaus 20 ist einerseits eine gute Durchleuchtbarkeit des Schichtaufbaus 20 gegeben, andrerseits kann bei Tag eine hochwertig anmutende Farberscheinung erreicht werden.

In der Figur ist auch erkennbar, dass die Trägerfolie 20a und der sich daran anschließende Schichtaufbau 20b bzw. 20R an der Lichtscheibe 10 anliegt. Im Ausführungsbeispiel besteht der randseitige Schichtaufbau 20R aus fünf Teilschichten 20R1 bis 20R5.

Alle Teilschichten 20R1 bis 20R5 sind lichtundurchlässig (opak) oder nahezu lichtundurchlässig ausgebildet. Es ist zumindest sichergestellt, dass alle Teilschichten 20R1 bis 20R5 zusammen 100 Prozent lichtundurchlässig sind.

Allerdings weisen die einzelnen Teilschichten 20R1 bis 20R5 Farben unterschiedlicher Helligkeiten H auf. So weist die erste, zur Wandung 10R am nächsten liegende Teilschicht 20R1 die Farbe mit der größten Helligkeit H und die letzte, von der Wandung 10R am weitesten beabstandete Teilschicht 20R5 die Farbe mit der geringsten Helligkeit H auf.

Zwischen den Teilschichten 20R1 bis 20R5 wird vorzugsweise eine gleichmäßige Abstufung in einer Helligkeit H der Farben gewählt.

Im Ausführungsbeispiel ist als Farbe der Teilschicht 20R5 schwarz gewählt. Als Farbe der Teilschicht 20R1 ist weiß gewählt.

Im Ausführungsbeispiel sind die besagten Schichten bzw. Teilschichten derart ausgebildet, dass sich im Tagdesign der Emblemanordnung 1 (also im unbeleuchtetem Zustand) ein Farbanmutung im sogenannten L*a*b*-Farbraum mit folgenden Werten ergibt:

| | **L*(D65)** | **A*(D65)** | **B*(D65)** |
|---|---|---|---|
| **Farbe weiß** | 61,82 | -1,03 | -1,80 |
| **Farbe schwarz** | 3,54 | -0,07 | -1,33 |

Dabei wird durch die L-Werte die Helligkeit angegeben und durch die a- bzw. b-Werte die Farbintensität zwischen grün und rot (a) bzw. zwischen blau und gelb (b).

Der Wert D65 gibt an, dass die Farbanmutung bei einer Beleuchtung der Emblemanordnung 1 mit einer Normlichtquelle mit D65-Lichtspektrum (Tageslicht, 6.500K) gemessen wurde.

In der Figur ist noch angedeutet, dass im Lichtleiter 30 weitere Störstellen 33 eingebracht sein können, die eine Lenkung von Lichtstrahlen L3 in Richtung der Lichtscheibe 10 fördern.

Die Fig. 5d zeigt eine Emblemanordnung 1b, die im Gegensatz zum vorherigen Ausführungsbeispiel auf den Einsatz eines Lichtleiters verzichtet. Der Schichtaufbau 20b bzw. 20R ist jedoch der gleiche.

Insbesondere wird hierbei durch die Platine 40 und die Lichtscheibe 10 ein Reflexionsraum RR gebildet, der wie eine Lichtkammer wirkt, die von Lichtstrahlen homogen ausgefüllt werden. Die den Reflexionsraum RR begrenzenden Wände sind zweckmäßigerweise mit einer gut reflektierenden Schicht überzogen, um eine Homogenisierung der Lichtstrahlen zu fördern.

Anhand der Fig. 5e ist eine Emblemanordnung 1c ersichtlich, bei der im Unterschied zur Emblemanordnung 1 Lichtstrahlen L2, L3 von Leuchtmitteln (LEDs) 41 randseitig in den Lichtleiter 30 eingekoppelt wird. Zusätzlich ist ein ringartiges Lichtdämpfungselement 100 zwischen dem Lichtleiter 30 und der Lichtscheibe 10 angeordnet. Dies führt dazu, dass im Randbereich aus dem Lichtleiter 30 in Richtung der Lichtscheibe 10 austretende Lichtstrahlen L3 in ihrer Intensität gedämpft werden. Auf diese Weise ist es möglich, einen Radarsensor 80 mit einem Radarkegel R einzusetzen und trotzdem im Randbereich der Lichtscheibe 10 das Auftreten von zu hoher, störender Lichtintensität zu vermeiden.

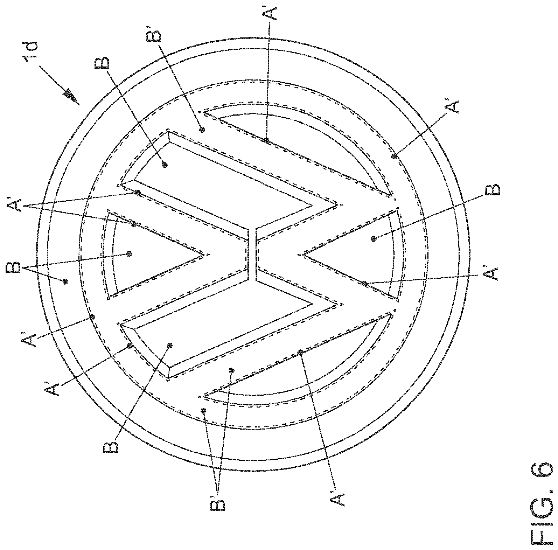

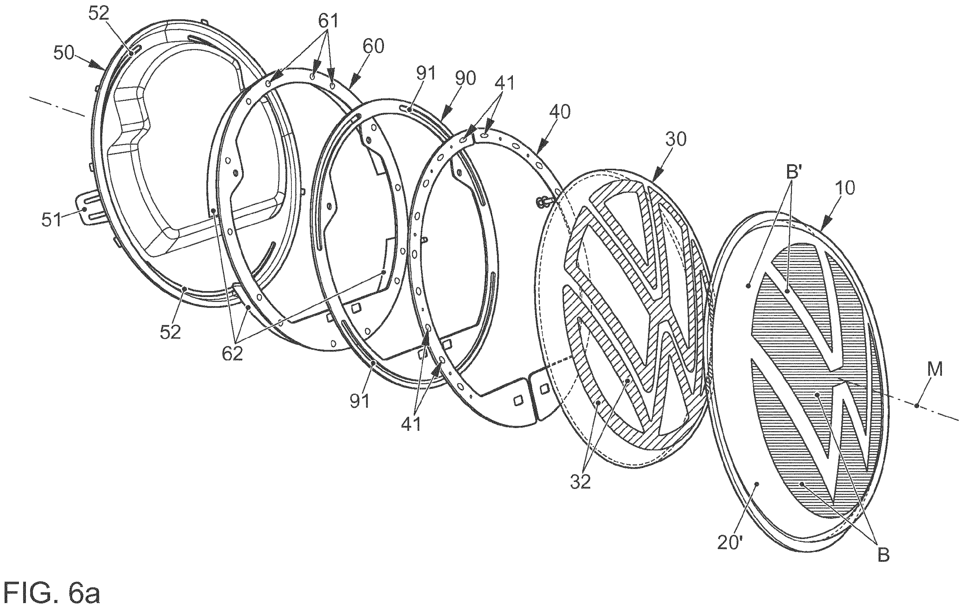

Anhand der Fig. 6 wird eine Emblemanordnung 1d beschrieben, bei der ein völlig anderes Tag- und Nachtdesign erzeugt werden kann. Konkret ist hierbei ein ein Markenemblem aufweisender Schichtaufbau vorhanden, durch den lichtdurchlässige Bereiche A' erzeugt werden, welche linienartig oder allenfalls als dünne Streifen ausgebildet sind. Die lichtdurchlässigen Bereiche A' begrenzen konturartig lichtundurchlässige Bereiche B'. Ferner sind zwischen den lichtdurchlässigen Bereichen A' wiederum lichtundurchlässige Bereiche B angeordnet.

Auch ist der Schichtaufbau der Emblemanordnung 1d, welcher später noch näher erläutert wird, etwas anders aufgebaut. Dies führt dazu, dass bei Tag für einen Betrachter die lichtundurchlässigen Bereiche B' deutlich sichtbar sind und dadurch ein durch die lichtundurchlässigen Bereiche B' geformtes Markenemblem deutlich sichtbar wird.

Bei Dunkelheit hingegen werden lediglich die lichtdurchlässigen Bereiche A' hinterleuchtet, so dass lediglich eine durch die Bereiche A' gebildete Kontur des Markenemblems sichtbar wird.

In der Figur 6a ist die Emblemanordnung 1d in einer perspektivischen Explosionsdarstellung ersichtlich. Konkret ist zunächst wieder eine Lichtscheibe 10 vorhanden, auf der rückseitig ein Schichtaufbau 20' aufgebracht ist. Danach folgt ein Lichtleiter 30, der insbesondere flächig (als Flächenlichtleiter) ausgebildet ist und rückseitig (der Lichtscheibe 10 abgewandt) eine aus linien- oder streifenartigen Lichtauskoppelbereichen 32 bestehende Lichtauskoppelstruktur aufweist. Danach folgt eine ringförmige Platine 40, welche eine Vielzahl, beispielsweise 24 gleichmäßig verteilte LEDs 41 trägt. Ein ringförmiger Kühlkörper 60 dient zur Abführung der durch die LEDs 41 erzeugten Wärme. Eine Dichtung 90 dient zur Abdichtung der Emblemanordnung 1d gegenüber einem Nassbereich (nicht dargestellt) in der Montageposition. Schlitzartige Öffnungen 91 in der Dichtung 90 erlauben ein Durchtreten von Vorsprüngen 61 des Kühlkörpers 60, die somit die Rückseite der Platine 40 zwecks Kühlung kontaktieren können. Dementsprechend weist auch ein Emblemträgerteil 50 schlitzartige Öffnungen 52 auf, die im Bereich der Öffnungen 91 angeordnet sind und deren Form und Anzahl entsprechen. Durch die Öffnungen 52 ragen entsprechend geformte Kühlrippen 62 des Kühlkörpers 60 hindurch. Die Bauteile der Emblemanordnung 1d sind ebenfalls kreisförmig ausgebildet, so dass sich eine Mittelachse M ergibt.

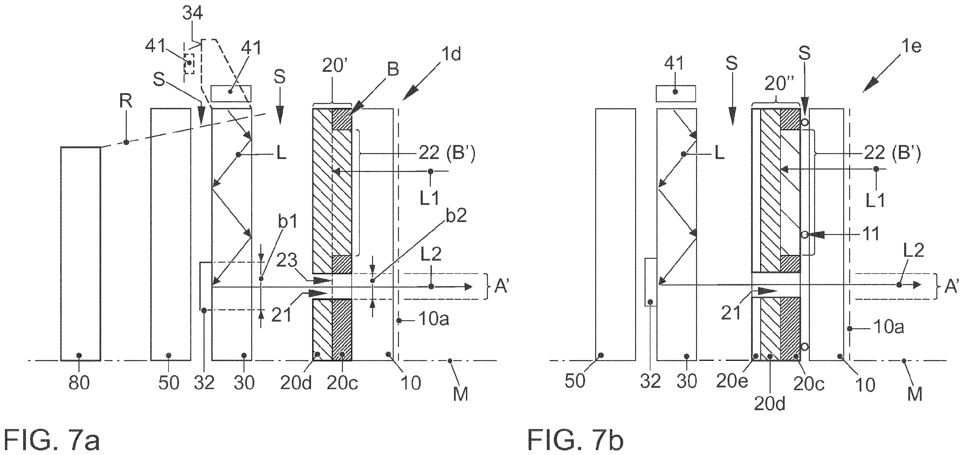

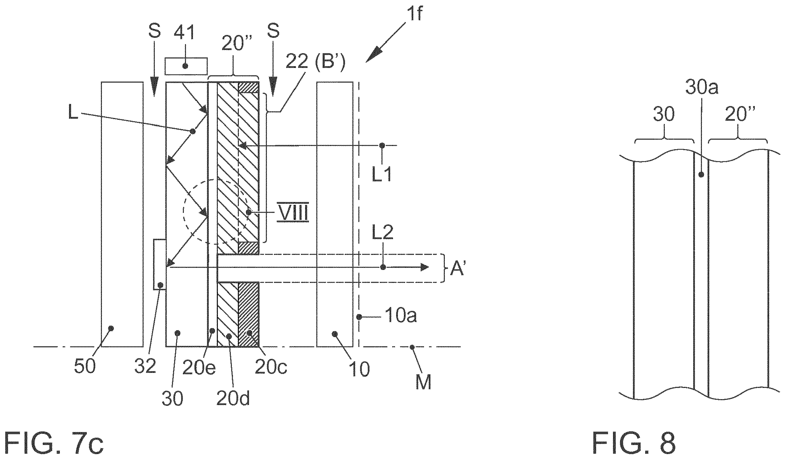

In den Figuren 7 sind wiederum schematisch mögliche Schichtaufbauten dargestellt. So soll bei diesen Ausführungsbeispielen im Montagezustand der Emblemanordnung 1d ein Radarsensor 80 von der Emblemanordnung 1d überdeckt werden (nur bei Fig. 7a dargestellt). Aus diesem Grund sind hierbei Leuchtmittel 41 nur seitlich vom Lichtleiter 30 angeordnet, so dass die Leuchtmittel 41 außerhalb eines erzeugbaren Radarkegels R liegen. Es ist denkbar, dass mehrere Leuchtmittel 41 an der radialen Außenseite des Lichtleiters 30 verteilt angeordnet sind. Dies kann beispielsweise durch die ringförmige Platine 40 bewerkstelligt werden, wie sie in der Figur 6a gezeigt wurde. Gestrichelt ist die sich daraus ergebende Ausrichtung der Leuchtmittel 41 angedeutet. Deren Licht wird in eine stirnseitige Lichteinkoppelfläche 34 des Lichtleiters 30 eingekoppelt. Lichtstrahlen L werden somit von der radialen Außenseite in den Lichtleiter 30 eingekoppelt und über Lichtauskoppelbereiche 32 wiederum in Richtung der Lichtscheibe 10 ausgekoppelt.

In einer Ausführungsform (Fig. 7a) ist ein Schichtaufbau 20' an die Rückseite der Lichtscheibe 10 angespritzt.

Der Schichtaufbau 20' besteht aus einer lichtundurchlässigen, vorzugsweise schwarzen Schicht 20c (diese Schicht bildet die lichtundurchlässigen Bereiche B) und einer dem Lichtleiter 30 zugewandten, radardurchlässigen Schicht 20d. Die Schicht 20d weist zudem eine Chromanmutung auf. Als Material für die radardurchlässige Schicht, welche zudem eine Chromanmutung aufweist, wird der Einsatz von dem Halbleiter Germanium oder Indium bevorzugt. Andere, gleichwertige Materialien sind denkbar.

Des Weiteren ist ersichtlich, dass der Schichtaufbau 20' in bestimmten Bereichen 21 vollständig entfernt ist. Die Bereiche 21 sind insbesondere linienartig oder als dünne Streifen ausgebildet. In einer Draufsicht auf den Umriss der Emblemanordnung 1 sind die Bereiche 21 derart ausgerichtet, dass sie mit den Lichtauskoppelbereichen 32, welche ebenfalls linienartig oder als dünne Streifen ausgebildet sind, in etwa zur Deckung kommen. Vorzugsweise ist eine Breite b1 der Lichtauskoppelbereiche 32 größer als ein Breite b2 der Bereiche 21. Die Breite der Lichtauskoppelbereiche 32 ist besonders bevorzugt derart gewählt, dass von einer Sicht von außen auf die Emblemanordnung 1d die Bereiche 21 aus allen Blickwinkeln von den Lichtauskoppelbereichen 32 überlappt werden und ein Betrachter keine freie Sicht auf hinter den Lichtauskoppelbereichen 32 befindliche Bauteile hat.

Dies führt ferner dazu, dass bei ausgesendeten Lichtstrahlen L der Leuchtmittel 41 diese an den Lichtauskoppelbereichen 32 durch die Bereiche 21 und die transparente Lichtscheibe 10 als Lichtstrahlen L2 nach außen hindurch treten und die konturartig leuchtenden, lichtdurchlässigen Bereiche A' ausbilden.

Des Weiteren sind Materialausnehmungen 22 in der lichtundurchlässigen Schicht 20c vorhanden. In einer Draufsicht auf den Umriss der Emblemanordnung 1d von der Sichtseite her weisen die Materialausnehmungen 22 den Umriss der lichtundurchlässigen Bereiche B' auf und bilden somit in der Fläche die Form des eigentlichen Markenemblems ab (vergleiche auch Fig. 6). Zusätzlich ist denkbar, die Bereiche 21, in denen der Schichtaufbau 20' entfernt wurde, zumindest teilweise mit einer semitransparenten Schicht 23 zu füllen, welche in ihrer Dicke beispielweise in etwa der lichtundurchlässigen Schicht 20c entsprechen kann.

Die Materialausnehmungen 22 können in Abhängigkeit des Herstellungsverfahrens auch mit Material der chromanmutenden Schicht 20d ausgefüllt sein. Dies trifft zum Beispiel dann zu, wenn auf die Lichtscheibe 10 zunächst die schwarze Schicht 20c unter Maskierung der Ausnehmungen 22 bzw. der lichtundurchlässigen Bereiche B' auf die Lichtscheibe 10 aufgetragen und erst danach vollflächig die chromanmutende Schicht 20d auf das aus Lichtscheibe 10 und Schicht 20c bestehende Substrat aufgebracht, vorzugsweise aufgedampft wird.

Lichtstrahlen L1, die vom Umgebungslicht auf die Emblemanordnung 1 fallen, treten somit zunächst durch die Lichtscheibe 10 hindurch und treffen dann auf die chromanmutende Schicht 20d auf. Durch Reflexion entsteht bei Tageslicht für einen Betrachter somit das Aussehen eines chromglänzenden Markenemblems.

Mit 10a ist wiederum eine UV-Schutzschicht beziffert, welche auf der Außenseite der Lichtscheibe 10 aufgebracht sein kann. Denkbare Luftspalte sind mit S beziffert.

In der Fig. 7b ist bei einer Emblemanordnung 1e im Unterschied zur Fig. 7a ein etwas anderer Schichtaufbau 20" vorhanden. Konkret weist der Schichtaufbau 20" ein transparentes Trägerteil 20e auf, welches vorzugsweise plattenartig ausgebildet sein kann. Unter Umständen ist es auch denkbar, das Trägerteil 20e als tiefgezogene Folie auszubilden und damit die Voraussetzung für einen 3D-Effekt zu bieten. Auf dem Trägerteil 20e ist wiederum eine chromanmutende, radardurchlässige Schicht 20d aufgebracht, die ihrerseits unter Ausmaskierung der Materialausnehmungen mit einer lichtundurchlässigen, vorzugsweise schwarzen Schicht 20c überdeckt ist.

Durch diesen Aufbau kann der Schichtaufbau 20" als eigenständiges, separates Bauteil vorgefertigt werden. Eine stoffschlüssige Verbindung mit der Lichtscheibe 10, beispielsweise durch ein Anspritzen, kann somit hier entfallen. Um allerdings einen definierten Luftspalt S erzeugen zu können, ist es zweckmäßig an bestimmten Stellen als Abstandshalter punktartige Abstandsnoppen 11 zwischen dem Schichtaufbau 20" und der Lichtscheibe 10 vorzuhalten. Die Abstandsnoppen 11 können vorzugsweise einstückiger Bestandteil der Lichtscheibe 10 sein.

Im Übrigen ist der Einsatz von Abstandshaltern, vergleichbar mit den Abstandnoppen 11, auch an anderen Stellen denkbar und zweckmäßig, wo bestehende Abstände bzw. Luftspalte S zwischen Bauteilen kontrolliert werden sollen. Beispielsweise sind Abstandshalter daher auch zwischen dem Gehäuse 50 und dem Lichtleiter 30 und/oder auch zwischen dem Lichtleiter 30 und dem Schichtaufbau 20, 20', 20" denkbar.

Schließlich ist in der Fig. 7c eine Ausführungsform einer Emblemanordnung 1f dargestellt, bei der im Unterschied zur Fig. 7b der Schichtaufbau 20" unmittelbar auf dem Lichtleiter 30 aufgebracht ist.

Um allerdings auf Grund des direkten Kontaktes einer durch den Schichtaufbau 20" gebildeten Grenzfläche mit dem Lichtleiter 30 ein zu frühes Auskoppeln von Lichtstrahlen L zu vermeiden, ist auf dem Lichtleiter 30 eine dem Schichtaufbau 20" zugewandte, transparente Schicht 30a aufgebracht, welche einen anderen Brechungsindex aufweist, als der Lichtleiter 30 (vergleiche Fig. 8). Hierdurch wird ermöglicht, dass die Lichtstrahlen L bis hin zu den Lichtauskoppelbereichen 32 gelangen und erst dort als Lichtstrahlen L2 in Richtung der Lichtscheibe 10 ausgekoppelt werden.

### Bezugszeichenliste

- 1, 1a-1f: Emblemanordnung
- 10: Lichtscheibe
- 10a: UV-Schutzschicht
- 10R: randseitige, umlaufende Wandung der Lichtscheibe
- 11: Abstandsnoppen
- 20, 20', 20": Schichtaufbau
- 20a: transparente Trägerfolie, tiefgezogen
- 20b: Siebdruckschicht
- 20b1-20b3: Teilschichten
- 20c: lichtundurchlässige Schicht
- 20d: chromanmutende, radardurchlässige Schicht
- 20e: transparentes Trägerteil
- 20R: randseitiger Schichtaufbau
- 20R1-20R5: Teilschichten
- 21: linien- oder streifenartige Bereiche
- 22: Materialausnehmungen
- 23: semitransparente Schicht
- 30: Lichtleiter
- 30a: transparente Schicht mit anderem Brechungsindex als Lichtleiter
- 31: Vertiefungen
- 32: linien- oder streifenartige Lichtauskoppelbereiche
- 33: Störstellen
- 34: Lichteinkoppelfläche
- 40: Platine
- 41: Leuchtmittel, LEDs
- 50: Emblemträgerteil
- 51: Rastmittel
- 52: schlitzartige Öffnungen
- 60: Kühlkörper
- 61: Vorsprünge
- 62: Kühlrippen
- 70: Befestigungsmittel
- 80: Radarsensor
- 90: Dichtung
- 91: schlitzartige Öffnungen
- 100: Lichtdämpfungselement

- A, A': lichtdurchlässige Bereiche
- A1: lichtdurchlässiger Bereich
- B, B': lichtundurchlässige Bereiche
- b1, b2: Breite
- H: Helligkeit
- K: Kraftfahrzeug
- L, L1, L2, L3: Lichtstrahlen
- M: Mittelachse
- R: Radarkegel
- RR: Reflexionsraum
- S: Luftspalte

## Patentansprüche

1. Emblemanordnung (1, 1a-1f) für ein Kraftfahrzeug (K), mit einem Emblemträgerteil (50) und einem ein Markenemblem ausbildendes Element, ferner mit wenigstens einem Leuchtmittel (41) zur Beleuchtung der Emblemanordnung (1, 1a-1f), wobei das das Markenemblem ausbildende Element ein wenigstens zwei Schichten (20a, 20b; 20c, 20d, 20e) aufweisender Schichtaufbau (20, 20', 20") ist, der, in einer Draufsicht auf die Emblemanordnung (1, 1a-1f) gesehen, lichtdurchlässige (A, A') und lichtundurchlässige (B, B') Bereiche aufweist, **dadurch gekennzeichnet, dass** der Schichtaufbau (20) eine erste, als transparente Trägerfolie ausgebildete Schicht (20a) aufweist und eine zweite Schicht (20b), durch welche die lichtdurchlässigen (A) und die lichtundurchlässigen (B) Bereiche ausgebildet werden, wobei die zweite Schicht (20b) aus wenigstens zwei aufeinanderliegenden Teilschichten (20b1, 20b2 und 20b3) besteht, von denen eine erste Teilschicht (20b1) die lichtdurchlässigen (A) und die lichtundurchlässigen (B) Bereiche ausbildet und die wenigstens eine zweite Teilschicht (20b2) lichtdurchlässig ausgebildet ist und die gleiche Farbe aufweist, wie die lichtdurchlässigen Bereiche (A) der ersten Teilschicht (20b1),
**dadurch gekennzeichnet, dass** der Schichtaufbau (20) an einer Lichtscheibe (10) anliegt und die Lichtscheibe (10) eine randseitige, umlaufende Wandung (10R) aufweist, an der ein sich vom übrigen Schichtaufbau (20) unterscheidender, randseitiger Schichtaufbau (20R) vorliegt, der wenigstens drei aufeinanderliegende Teilschichten (20R1-20R5) aufweist, von denen die Farbe der zur Wandung (10R) am nächsten liegenden Teilschicht (20R1) die größte Helligkeit und die Farbe der von der Wandung (10R) am weitesten beabstandeten Teilschicht (20R5) die geringste Helligkeit aufweist.

2. Emblemanordnung (1, 1a-1f) für ein Kraftfahrzeug (K), mit einem Emblemträgerteil (50) und einem ein Markenemblem ausbildendes Element, ferner mit wenigstens einem Leuchtmittel (41) zur Beleuchtung der Emblemanordnung (1, 1a-1f), wobei das das Markenemblem ausbildende Element ein wenigstens zwei Schichten (20a, 20b; 20c, 20d, 20e) aufweisender Schichtaufbau (20, 20', 20") ist, der, in einer Draufsicht auf die Emblemanordnung (1, 1a-1f) gesehen, lichtdurchlässige (A, A') und lichtundurchlässige (B, B') Bereiche aufweist, wobei der Schichtaufbau (20', 20") eine erste, lichtundurchlässige Schicht (20c) und wenigstens eine zweite, lichtundurchlässige Schicht (20d) aufweist, wobei der Flächenlichtleiter (30) auf seiner dem Schichtaufbau (20', 20") abgewandten Seite eine Lichtauskoppelstruktur (32) aufweist, die in einer Draufsicht auf den Umriss der Emblemanordnung (1d-1f) mit Bereichen (21) zur Deckung kommt, in denen der Schichtaufbau (20', 20") vollständig entfernt ist, wobei durch die Bereiche (21) die lichtdurchlässigen Bereiche (A') ausgebildet werden,
**dadurch gekennzeichnet, dass** die Emblemanordnung (1d-1f) in ihrem Randbereich wenigstens eine Platine (40) aufweist, auf der mehrere Leuchtmittel (41) angeordnet sind, deren Licht (L) im Randbereich der Emblemanordnung (1d-1f) in einen Flächenlichtleiter (30) eingekoppelt wird, und dass die Lichtauskoppelstruktur (32) des Lichtleiters (30) eine Bedruckung ist und streifenartige Abschnitte aufweist und die Bereiche (21), in denen der Schichtaufbau (20', 20") vollständig entfernt ist, linien- oder streifenartig ausgebildet sind, wobei eine Breite (b1) der streifenartigen Abschnitte größer ist als eine Breite (b2) der linien- oder streifenartig ausgebildeten Bereiche (21).

3. Emblemanordnung (1, 1a-1c) nach einem der Ansprüche 1 und 2, **dadurch gekennzeichnet, dass** die zweite Schicht (20b) aus wenigstens drei aufeinanderliegenden Teilschichten (20b1, 20b2 und 20b3) besteht, von denen eine erste Teilschicht (20b1) die lichtdurchlässigen (A) und die lichtundurchlässigen (B) Bereiche ausbildet und die wenigstens eine zweite und dritte Teilschicht (20b2 und 20b3) lichtdurchlässig ausgebildet sind und die gleiche Farbe aufweisen, wie die lichtdurchlässigen Bereiche (A) der ersten Teilschicht (20b1).

4. Emblemanordnung (1, 1a-1c) nach einem der Ansprüche 1 und 2, **dadurch gekennzeichnet, dass** die Farbe der von der Wandung (10R) am weitesten beabstandeten Teilschicht (20R5) schwarz ist und die Farbe der zur Wandung (10R) am nächsten liegenden Teilschicht (20R1) die gleiche Farbe aufweist, wie die lichtdurchlässigen Bereiche (A) der die lichtdurchlässigen (A) und lichtundurchlässigen (B) Bereiche ausbildenden Teilschicht (20b1).

5. Emblemanordnung (1, 1a-1c) nach Anspruch 4, **dadurch gekennzeichnet, dass** die Farbe der zur Wandung (10R) am nächsten liegenden Teilschicht (20R1) weiß ist.

6. Emblemanordnung (1d-1f) nach einem der Ansprüche 1 und 2, **dadurch gekennzeichnet, dass** der Schichtaufbau (20', 20") für Radarstrahlen durchlässig ausgebildet ist.

7. Emblemanordnung (1d-1f) nach Anspruch 6, **dadurch gekennzeichnet, dass** die zweite, lichtundurchlässige Schicht (20d) aus einem Halbleiter ausgebildet ist.

8. Emblemanordnung (1d-1f) nach einem der vorhergehenden Ansprüche 2 sowie 6 und 7, wenn bezogen auf Anspruch 2, **dadurch gekennzeichnet, dass** die Platine (40) ringartig ausgebildet ist.

9. Emblemanordnung (1, 1a-1c) nach einem der vorhergehenden Ansprüche, **dadurch gekennzeichnet, dass** der Lichtleiter (30) an seiner dem Emblemträgerteil (50) zugewandten Seite mehrere Vertiefungen (31) aufweist, in die jeweils ein Leuchtmittel (41) hineinragt, wobei die Vertiefungen (31) mit den Leuchtmitteln (41) nach außen von den lichtundurchlässigen Bereichen (B) verdeckt sind.

10. Emblemanordnung (1, 1a-1f) nach einem der vorhergehenden Ansprüche, **dadurch gekennzeichnet, dass** Abstandshalter vorhanden sind, um definierte Luftspalte (S) zwischen dem Emblemträgerteil (50) und dem Lichtleiter (30), zwischen dem Lichtleiter (30) und dem das Markenemblem ausbildenden Element und/oder zwischen dem das Markenemblem ausbildenden Element und der Lichtscheibe (10) zu erzeugen.

11. Emblemanordnung (1c) nach einem der vorhergehenden Ansprüche 2 sowie 6-10, wenn bezogen auf Anspruch 2, **dadurch gekennzeichnet, dass** zwischen dem Lichtleiter (30) und der Lichtscheibe (10) ein ringförmiges Lichtdämpfungselement (90) angeordnet ist.

12. Kraftfahrzeug (K), **gekennzeichnet durch** wenigstens eine Emblemanordnung (1) nach einem der vorhergehenden Ansprüche.

## Claims

1. Emblem arrangement (1, 1a-1f) for a motor vehicle (K), having an emblem support part (50) and an element forming a brand emblem, furthermore having at least one luminous element (41) for illuminating the emblem arrangement (1, 1a-1f), wherein the element forming the brand emblem is a layer structure (20, 20', 20") comprising at least two layers (20a, 20b; 20c, 20d, 20e) which, as seen in a top view of the emblem arrangement (1, 1a-1f), comprises translucent (A, A') and non-translucent (B, B') regions, **characterized in that** the layer structure (20) comprises a first layer (20a) configured as a transparent support sheet and a second layer (20b) by which the translucent (A) and the non-translucent (B) regions are formed, the second layer (20b) consisting of at least two partial layers (20b1, 20b2 and 20b3) lying on one another, of which a first partial layer (20b1) forms the translucent (A) and the non-translucent (B) regions and the at least one second partial layer (20b2) is configured to be translucent and has the same colour as the translucent regions (A) of the first partial layer (20b1), **characterized in that** the layer structure (20) bears on a cover glass (10), the cover glass (10) comprising a peripheral circumferential wall (10R) on which there is a peripheral layer structure (20R) that is different to the rest of the layer structure (20) and comprises at least three partial layers (20R1-20R5) lying on one another, of which the colour of the partial layer (20R1) closest to the wall (10R) has the highest brightness and the colour of the partial layer (20R5) furthest away from the wall (10R) has the lowest brightness.

2. Emblem arrangement (1, 1a-1f) for a motor vehicle (K), having an emblem support part (50) and an element forming a brand emblem, furthermore having at least one luminous element (41) for illuminating the emblem arrangement (1, 1a-1f), wherein the element forming the brand emblem is a layer structure (20, 20', 20") comprising at least two layers (20a, 20b; 20c, 20d, 20e) which, as seen in a top view of the emblem arrangement (1, 1a-1f), comprises translucent (A, A') and non-translucent (B, B') regions, wherein the layer structure (20', 20") comprises a first non-translucent layer (20c) and at least one second non-translucent layer (20d), the flat light guide (30) comprising, on its side facing away from the layer structure (20', 20"), a light output structure (32) which is superimposed in a top view of the outline of the emblem arrangement (1d-1f) with regions (21) in which the layer structure (20', 20") is entirely removed, the translucent regions (A') being formed by the regions (21), **characterized in that** the emblem arrangement (1d-1f) comprises, in its edge region, at least one circuit board (40) on which a plurality of luminous means (41) are arranged, the light (L) of which is coupled in the edge region of the emblem arrangement (1d-1f) into a flat light guide (30), and **in that** the light output structure (32) of the light guide (30) is a printing and comprises strip-like sections, and the regions (21) in which the layer structure (20', 20") is fully removed are configured to be linear or strip-like, a width (b1) of the strip-like sections being greater than a width (b2) of the regions (21) configured to be linear or strip-like.

3. Emblem arrangement (1, 1a-1c) according to either of Claims 1 and 2, **characterized in that** second layer (20b) consists of at least three partial layers (20b1, 20b2 and 20b3) lying on one another, of which a first partial layer (20b1) forms the translucent (A) and the non-translucent (B) regions and the at least one second and third partial layer (20b2 and 20b3) are configured to be translucent and have the same colour as the translucent regions (A) of the first partial layer (20b1).

4. Emblem arrangement (1, 1a-1c) according to either of Claims 1 and 2, **characterized in that** the colour of the partial layer (20R5) furthest away from the wall (10R) is black and the colour of the partial layer (20R1) closest to the wall (10R) has the same colour as the translucent regions (A) of the partial layer (20b1) forming the translucent (A) and non-translucent (B) regions.

5. Emblem arrangement (1, 1a-1c) according to Claim 4, **characterized in that** the colour of the partial layer (20R1) closest to the wall (10R) is white.

6. Emblem arrangement (1d-1f) according to either of Claims 1 and 2, **characterized in that** the layer structure (20', 20") is configured to be transmissive for radar beams.

7. Emblem arrangement (1d-1f) according to Claim 6, **characterized in that** the second non-translucent layer (20d) is formed from a semiconductor.

8. Emblem arrangement (1d-1f) according to any one of preceding Claim 2 and preceding Claims 6 and 7 when referring to Claim 2, **characterized in that** the circuit board (40) is configured in the shape of a ring.

9. Emblem arrangement (1, 1a-1c) according to any one of the preceding claims, **characterized in that** the light guide (30) comprises, on its side facing toward the emblem support part (50), a plurality of depressions (31) into which a luminous means (41) respectively protrudes, the depressions (31) with the luminous means (41) being covered outwardly by the non-translucent regions (B).

10. Emblem arrangement (1, 1a-1f) according to any one of the preceding claims, **characterized in that** spacers are provided in order to produce defined air gaps (S) between the emblem support part (50) and the light guide (30), between the light guide (30) and the element forming the brand emblem and/or between the element forming the brand emblem and the cover glass (10).

11. Emblem arrangement (1c) according to any one of preceding Claims 2 and preceding Claims 6-10 when referring to Claim 2, **characterized in that** an annular light attenuation element (90) is arranged between the light guide (30) and the cover glass (10).

12. Motor vehicle (K), **characterized by** at least one emblem arrangement (1) according to any one of the preceding claims.

## Revendications

1. Agencement d'emblème (1, 1a-1f) pour un véhicule automobile (K), comprenant une partie de support d'emblème (50) et un élément formant un emblème de marque, comprenant en outre au moins un moyen d'éclairage (41) pour éclairer l'agencement d'emblème (1, 1a-1f), l'élément formant l'emblème de marque étant une structure de couches (20, 20', 20") présentant au moins deux couches (20a, 20b ; 20c, 20d, 20e) qui, dans une vue de dessus de l'agencement d'emblème (1, 1a-1f), présente des zones transparentes à la lumière (A, A') et des zones opaques à la lumière (B, B'), **caractérisé en ce que** la structure de couches (20) présente une première couche (20a) réalisée sous forme de film de support transparent et une deuxième couche (20b), par laquelle sont formées les zones transparentes à la lumière (A) et les zones opaques à la lumière (B), la deuxième couche (20b) étant constituée d'au moins deux couches partielles (20b1, 20b2 et 20b3) superposées, dont une première couche partielle (20b1) forme les zones transparentes à la lumière (A) et les zones opaques à la lumière (B) et l'au moins une deuxième couche partielle (20b2) est réalisée sous forme transparente à la lumière et présente la même couleur que les zones transparentes à la lumière (A) de la première couche partielle (20b1),
**caractérisé en ce que** la structure de couches (20) s'applique contre un disque lumineux (10) et le disque lumineux (10) présente une paroi périphérique (10R) du côté du bord, sur laquelle se trouve une structure de couches (20R) du côté du bord, différente du reste de la structure de couches (20), qui présente au moins trois couches partielles (20R1-20R5) superposées, dont la couleur de la couche partielle (20R1) située le plus près de la paroi (10R) présente la plus grande luminosité et la couleur de la couche partielle (20R5) la plus espacée de la paroi (10R) présente la plus faible luminosité.

2. Agencement d'emblème (1, 1a-1f) pour un véhicule automobile (K), comprenant une partie de support d'emblème (50) et un élément formant un emblème de marque, comprenant en outre au moins un moyen d'éclairage (41) pour éclairer l'agencement d'emblème (1, 1a-1f), l'élément formant l'emblème de marque étant une structures de couches (20, 20', 20") présentant au moins deux couches (20a, 20b ; 20c, 20d, 20e) qui, dans une vue de dessus de l'agencement d'emblème (1, 1a-1f), présente des zones transparentes à la lumière (A, A') et des zones opaques à la lumière (B, B'), la structure de couches (20', 20") présentant une première couche opaque à la lumière (20c) et au moins une deuxième couche opaque à la lumière (20d), le guide de lumière plat (30) présentant, sur son côté détourné de la structure de couches (20', 20"), une structure de découplage de lumière (32) qui, dans une vue de dessus du contour de l'agencement d'emblème (1d-1f), vient en recouvrement avec des zones (21) dans lesquelles la structure de couches (20', 20") est entièrement éliminée, les zones transparentes à la lumière (A') étant formées par les zones (21), **caractérisé en ce que** l'agencement d'emblème (1d-1f) présente dans sa zone de bord au moins une platine (40) sur laquelle sont agencés plusieurs moyens d'éclairage (41) dont la lumière (L) est couplée dans la zone de bord de l'agencement d'emblème (1d-1f) dans un guide de lumière plat (30), et **en ce que** la structure de découplage de lumière (32) du guide de lumière (30) est une impression et présente des sections en forme de bandes et les zones (21), dans lesquelles la structure de couches (20', 20") est entièrement éliminée, sont réalisées sous forme de lignes ou de bandes, une largeur (b1) des sections en forme de bandes étant supérieure à une largeur (b2) des zones (21) réalisées sous forme de lignes ou de bandes.

3. Agencement d'emblème (1, 1a-1c) selon l'une quelconque des revendications 1 et 2, **caractérisé en ce que** la deuxième couche (20b) est constituée d'au moins trois couches partielles (20b1, 20b2 et 20b3) superposées, dont une première couche partielle (20b1) forme les zones transparentes à la lumière (A) et les zones opaques à la lumière (B) et les au moins une deuxième et troisième couches partielles (20b2 et 20b3) sont réalisées sous forme transparente à la lumière et présentent la même couleur que les zones transparentes à la lumière (A) de la première couche partielle (20b1).

4. Agencement d'emblème (1, 1a-1c) selon l'une quelconque des revendications 1 et 2, **caractérisé en ce que** la couleur de la couche partielle (20R5) la plus espacée de la paroi (10R) est noire et la couleur de la couche partielle (20R1) située le plus près de la paroi (10R) présente la même couleur que les zones transparentes à la lumière (A) de la couche partielle (20b1) formant les zones transparentes à la lumière (A) et les zones opaques à la lumière (B).

5. Agencement d'emblème (1, 1a-1c) selon la revendication 4, **caractérisé en ce que** la couleur de la couche partielle (20R1) située le plus près de la paroi (10R) est blanche.

6. Agencement d'emblème (1d-1f) selon l'une quelconque des revendications 1 et 2, **caractérisé en ce que** la structure de couches (20', 20") est réalisée sous forme transparente aux rayons radar.

7. Agencement d'emblème (1d-1f) selon la revendication 6, **caractérisé en ce que** la deuxième couche opaque à la lumière (20d) est formée à partir d'un semi-conducteur.

8. Agencement d'emblème (1d-1f) selon l'une quelconque des revendications 2 ainsi que 6 et 7 précédentes, lorsqu'elles se réfèrent à la revendication 2, **caractérisé en ce que** la platine (40) est réalisée sous forme annulaire.

9. Agencement d'emblème (1, 1a-1c) selon l'une quelconque des revendications précédentes, **caractérisé en ce que** le guide de lumière (30) présente, sur son côté tourné vers la partie de support d'emblème (50), plusieurs renfoncements (31) dans chacun desquels pénètre un moyen d'éclairage (41), les renfoncements (31) avec les moyens d'éclairage (41) étant recouverts vers l'extérieur par les zones opaques à la lumière (B).

10. Agencement d'emblème (1, 1a-1f) selon l'une quelconque des revendications précédentes, **caractérisé en ce que** des espaceurs sont présents pour créer des espaces d'air (S) définis entre la partie de support d'emblème (50) et le guide de lumière (30), entre le guide de lumière (30) et l'élément formant l'emblème de marque et/ou entre l'élément formant l'emblème de marque et le disque lumineux (10).

11. Agencement d'emblème (1c) selon l'une quelconque des revendications 2 ainsi que 6 à 10 précédentes, lorsqu'elles se réfèrent à la revendication 2, **caractérisé en ce qu'**un élément d'atténuation de lumière annulaire (90) est agencé entre le guide de lumière (30) et le disque lumineux (10).

12. Véhicule automobile (K), **caractérisé par** au moins un agencement d'emblème (1) selon l'une quelconque des revendications précédentes.
